Europäisches Patentamt

European Patent Office

Office européen des brevets

(11) Publication number: **0 622 400 A1**

## EUROPEAN PATENT APPLICATION

(21) Application number: **94302991.8**

(22) Date of filing: **26.04.94**

(51) Int. Cl.[5]: **C08J 9/00,** B29C 67/22, C08G 18/08

(30) Priority: **27.04.93 US 53887**

(43) Date of publication of application: **02.11.94 Bulletin 94/44**

(84) Designated Contracting States: **AT BE CH DE DK ES FR GB GR IE IT LI LU MC NL PT SE**

(71) Applicant: **PMC, INC. PO Box 1367 12243 Branford Street Sun Valley California 91352 (US)**

(72) Inventor: **Reinink, Edwin 1 Prospect Street Highlands, New Jersey 07732 (US)**

(74) Representative: **W.P. THOMPSON & CO. Eastcheap House Central Approach Letchworth, Hertfordshire SG6 3DS (GB)**

(54) **Method of removing isocyanate from air streams.**

(57) A method for removing free diisocyanate from a polyurethane foam production line comprising introducing steam into the production line at at least one point where the free toluene diisocyanate is present.

EP 0 622 400 A1

## FIELD OF THE INVENTION

The present invention relates generally to the removal of isocyanate from air streams and is particularly applicable to the removal of unreacted toluene diisocyanate from the production of polyurethane foam.

## BACKGROUND OF THE INVENTION

Polyurethane foam is used in many applications including, for example, insulation, furnishings, construction, surface coatings, sport and medical care. Initially, polyurethane foams were manufactured in a "two-step" process. In this process, toluene diisocyanate was first reacted with polyether polyol or polyester resin to form a polyurethane prepolymer, which was in turn reacted with water to produce polyurethane foams. At present, however, the typical production of flexible polyether and polyester urethane foams is a "one-step" process. In this process, toluene diisocyanate is reacted with polyether polyol or polyester resin, water and auxiliary chemicals, such as catalysts, emulsifiers, and additives, in a common mixing chamber and is poured onto a moving conveyor which has been lined with a film such as paper or plastic. The blend of the reactants undergoes a polymerization reaction which forms polyurethane foam. After the urethane foam has sufficiently formed, the film is removed, the foam is cut to the desired length and then stored for final cure.

Toluene diisocyanate is generally a mixture of two isomers - 2,4-toluene diisocyanate and 2,6-toluene diisocyante - which are most commonly available in 80/20 (2,4 isomer to 2,6 isomer) or 65/35 mixtures. Toluene diisocyanate is typically introduced into the reaction in an amount in excess of the stoichiometric quantity required for a complete reaction with the polyether polyol or polyester resin because some of the toluene diisocyanate is vaporized during the reaction. The major portion of excess diisocyanate is consumed in additional cross-linking reactions in the later stages of polymerization or cure. Toluene diisocyanate emissions due to vaporization typically occur throughout the production process, including during the pouring stage, at the film separation stage, and at the cutting stage. Post-production fabrication processes involving heat, such as thermoforming, hot wire cutting flame laminating and heat embossing, also cause toluene diisocyanate emissions as the toluene diisocyanate present in the polyurethane foam is liberated by heat degradation of the foam.

Unfortunately, toluene diisocyanate poses serious health and environmental risks. Because of its toxicity, extreme care must be taken in the work place to avoid inhalation of toluene diisocyanate, which even at low concentrations can damage the respiratory tract. Contact with the skin must also be avoided.

To contain the free toluene diisocyanate generated during the urethane foam production and fabrication processes, the urethane foam production line is typically enclosed and has numerous exhaust stacks through which toluene diisocyanate and other volatile ingredients are vented to the atmosphere. The fabrication areas, while not enclosed, are ventilated. However, even though urethane production lines are enclosed and fabrication areas are ventilated, some toluene diisocyanate may enter the workplace.

Since toluene diisocyanate can cause respiratory problems at very low concentrations, the production, handling, distribution, use and emission of toluene diisocyanate is subject to rigorous control to protect workers and the population at large. For example, OSHA has set the workplace emission limit for toluene diisocyanate at 5 parts per billion as a time weighted average over 8 hours, and a short-term exposure limit of 20 parts per billion.

Although the problem of removing toluene diisocyanate from exhaust air streams and from the workplace has been studied extensively, attempts to efficiently remove toluene diisocyanate have been largely unsuccessful or unsatisfactory and have required expensive or complex apparatus and methods, or have generated additional side streams which require additional disposal.

For example, carbon beds have been installed in exhaust stacks along urethane production lines. Although these beds to trap toluene diisocyanate, the process is inefficient because a large bed is required due to the rapid exhaust air flow. Moreover, the toluene diisocyanate clogs the carbon pores, also reducing efficiency.

U.S. Patent 3,904,175 (Uehara et al.) discloses a process for removing water-soluble substances such as isocyanates by cooling the substances while they are in a cold trap, in contact with a drying agent, such as phosphorous pentoxide to form a solid and then recovering the trapped substance by the addition of heat.

U.S. Patent 4,061,662 and 4,169,175 (Marans et al.) disclose a process for reducing the concentration of unreacted toluene diisocyanate in polyisocyanate prepolymers by passing the polyisocyanate prepolymer through heated column packed with molecular sieves (e.g. commercially available zeolites). However, this process has no applicability to the "one-step" polyurethane foam process, since in that process, prepolymers are not formed.

U.S. Patent 4,724,256 (Starner et al.) discloses a liquid phase reaction to limit free toluene diisocyanate by forming a urethane linked hydroxy aromatic isocyanate prepolymer by reacting one equivalent aromatic diisocyanate with one equivalent of an alkaline polyol under conditions such that only one of the isocyanate groups react with the hydroxyl group of the polyol.

U.S. Patent 5,051,152 (Siuta et al.) discloses a process for reducing the amount of residual toluene diisocyanate in a polyurethane prepolymer reaction product. In this process, residual toluene diisocyanate is distilled in a wiped film evaporator from the prepolymer while an inert sweeping gas is passed through the distillation apparatus. However, neither the process of U.S. Patent 4,724,256 nor the process of U.S. Patent No. 5,081,152 is applicable to a "one-step" polyurethane foam process, which does not involve the use of prepolymers.

It has been suggested that unreacted toluene diisocyanate can be removed from polyurethane foam production using a water spray. This suggestion is based on the fact that toluene diisocyanate reacts with water to form amines and carbon dioxide according to the following reaction:

$$(1) \qquad RNCO + HOH \rightarrow RNH_2 + CO_2$$

where R is an aromatic group.

The amines can then further react with toluene diisocyanate to produce an aromatic urea, according to the reaction:

$$(2) \qquad RNCO + RNH_2 \rightarrow RNHCONH_2$$

where R is an aromatic group.

The stoichiometric ratio of water to toluene diisocyanate in reaction (1) above is about 1:10. The published literature indicates that the reaction between water and toluene diisocyanate is not very rapid because contact time is relatively short, although it can be catalyzed by amines. The literature also indicates that the reaction occurs more rapidly in the liquid state at the surface than in the vapor state. See generally Fate of Toluene Diisocyanate in Air - Phase II Study, P.B. Duff, Proceedings of the SPI - 29th Annual Technical/Marketing Conference, October 23-25, 1985, pp. 9-14; Fate of TDI and MDI in Air, Soil and Water, D.S. Gilbert, Proceedings of the Polyurethanes World Congress 1987, pp. 166-172; Some Actions Taken By Flexible Foam Producers in Europe to Meet the Requirements of Legislation on Health and the Environment, R. Hurd, Proceedings of the Polyurethanes World Congress 1991, pp. 26-35. However, in practice, the use of water, which is applied in a spray on top of the expanded foam, is not sufficient to remove free toluene diisocyanate.

Therefore, to date there has been no efficient and effective process for removing free toluene diisocyanate from polyurethane foam production lines where a "one-step" process is used.

## SUMMARY OF THE INVENTION

The present invention overcomes the problems associated with prior art systems for removal of toluene diisocyanate from polyurethane foam production, and achieves distinct advantages thereover. In accordance with the present invention, free toluene diisocyanate is removed. from polyurethane foam production lines using steam. The steam reacts with toluene diisocyanate to form amines and carbon dioxide according to the following reaction:

$$(1) \qquad RNCO + \uparrow HOH \rightarrow RNH_2 + CO_2$$

when R is an aromatic group.

The amines can then further react with toluene diisocyanate to produce an aromatic urea, according to the reaction:

$$(2) \qquad RNCO + RNH_2 \rightarrow RNHCONH_2$$

where R is an aromatic group. The fact that water in the vapor state (steam) can effectively remove toluene diisocyanate from an exhaust stream is surprising in view of the published literature which indicates that the reaction with water in a liquid state is not very rapid and that the water/toluene diisocyanate reaction occurs more rapidly in the liquid state than in the vapor state.

These and other features and advantages of the invention will be more readily apparent upon reading the following description of a preferred exemplified embodiment of the invention. While the invention will be described and disclosed in connection with certain preferred embodiments and procedures, it is not intended to limit the invention to those specific embodiments. Rather it is intended to cover all such alternative embodiments and modifications as fall within the spirit and scope of the invention. For example, steam may be used to remove free isocyanates, such as diphenylmethane diisocyanate and aliphatic isocyantes, generated in manufacturing processes other than polyurethane foam production.

## DETAILED DESCRIPTION OF THE PREFERRED EMBODIMENT

As stated above, steam may be used to remove free isocyanates generated in a manufacturing process, in the same manner as is discussed below. Thus, the description below, while being specifically directed to removal of free toluene diisocyanate generated during polyurethane foam production, is applicable generally to removal of other isocyanates from other manufacturing procedures.

As previously stated, polyurethane foam is typically produced by reacting toluene diisocyanate with a polyether polyol or polyester resin and water in a mixing chamber. The reaction mixture is then poured onto a moving conveyor the length of which defines a production line. Initially, the conveyor is lined with a film, such as paper or plastic. After the foam has sufficiently formed, the film is removed, and after the foam has traveled a further distance on the conveyor, the foam is cut to the desired length and stored for final curing. Unreacted toluene diisocyanate is vaporized and thereby released into the air at each stage along the production line, with the majority of unreacted toluene diisocyanate being released at the point of peak foam rise. The production line is enclosed, and typically contains exhaust stacks along its length. The foam can also undergo post-production fabrication processes, such as thermoforming, hot wire cutting, flame laminating and heat embossing, which result in the liberation of toluene diisocyanate. Thus, the phrase "production line" in this application includes the exhaust stacks and the areas where post-production fabrication processes are accomplished, in addition to the urethane foam production line itself.

In accordance with the present invention, steam is introduced at one or more sites along the production line where the toluene diisocyanate is released and/or present. Preferably, steam is introduced at least at the sites along the urethane production line where the majority of the toluene diisocyanate is released and/or present including, for example, the site of the peak foam rise, the site where the plastic and paper films are removed and one or more exhaust stacks. Steam may also be introduced into the post-production fabrication areas of the production line and the exhaust stacks from those areas.

The steam should be introduced in an amount sufficient to react with the free toluene diisocyanate. Since the steam reacts with the toluene diioscyanate in a stoichiometric ratio of 1:10, and the concentration of free toluene diisocyanate at a given point is at most in the range of about ten parts per billion to several hundred parts per billion, there will always be a very large excess of steam present. Typically, the use of steam in the amount of about two times the stoichiometric amount, i.e., a ratio of steam to toluene diisocyanate of 2:10, will insure the completeness of the reaction between the steam and the toluene diisocyanate. The steam should have an air-steam temperature of from about 150°F (66°C) to about 220°F (104°C), and a pressure prior to introduction into the production line of from about 10 to about 60 pounds per square inch (psi) (69 to 414 kPa), with a pressure of about 20 psi to about 40 psi (138 to 276 kPa) being preferred. The steam plume containing the reacted toluene diisocyanate (in the form of ureas and amines) along with carbon dioxide is vented to the atmosphere. Alternatively, the steam may be condensed and removed from the exhaust stream by known techniques.

The contact time between the steam and the toluene diisocyanate should be maximized to insure complete reaction between the steam and the toluene diisocyanate. A reaction time of about 5 to about 12 seconds is sufficient to insure the complete reaction, although even a shorter time, such as 2-3 seconds, will result in the reaction of substantial amounts of free toluene diisocyanate. Since it is known that surface contact accelerates the reaction, it may be desirable to include loose packing such as screens inside the vent stack to increase mixing with the exhaust stream. The steam may be introduced into the production line via the use of nozzles, pipes containing holes, or the like. The steam can be supplied from a boiler and piped to the production line via conventional techniques.

The following example is provided to illustrate one embodiment of the invention and aid in the understanding of the invention and is not intended to restrict the scope of the invention.

EXAMPLE

Marcali testing was conducted to determine the concentration of free toluene diisocyanate being emitted from one of the exhaust stacks of a production line before and after the addition of steam.

The exhaust stack which was tested drew air (about 6,600 acfm) from the chamber enclosing the production line near the plastic film removal area. The exhaust stack was about 8 feet (2.4m) long and had a 36-inch (0.91m) inner diameter. In order to introduce steam into the exhaust stack, a steam spray apparatus was installed in the exhaust stack about 1 foot (0.31m) upstream from the stack inlet and about 7 feet (2.lm) downstream from the stack outlet. The steam spray apparatus consisted of 1-inch (25.4mm) ID pipe having intermittent 1/8-inch (3.2mm) diameter holes and a safety shut-off and condensate valves. The temperature of the exhaust stream was from about 110°C to about 130°F (43 to 54°C) when only the production line is run without the addition of steam and from about 150°C to about 170°F (66 to 77°C) with the addition of steam. Steam having an air-stream temperature of about 160°F (71°C) was introduced from a low pressure boiler at a pressure prior to introduction of about 13 psi (90 kPa) at a rate of 0.5-1 gallons/min (0.032 to 0.064 dm$^3$s$^{-1}$). It took about 3-5 seconds for the steam to travel through the exhaust stack.

Marcali samples were drawn from the exhaust stack (1) during foam production without the addition of steam, (2) during foam production with the addition of steam, (3) after foam production without the addition of steam, and (4) after foam production with the addition of steam. Results of the Marcali sampling is tabulated in the following table.

| CONDITION | SAMPLE NUMBER | MARCALI (ppb) | AVERAGE |
|---|---|---|---|
| Foam production with no steam | 1 | 68 | |
| | 2 | 112 | |
| | 3 | 88 | 84 |
| | 4 | 68 | |
| Foam production with steam | 5 | 46 | |
| | 6 | 60 | |
| | 7 | 44 | 51 |
| | 8 | 36 | |
| Steam Only: No foam production and steam on | 10 | 22 | 25 |
| | 11 | 28 | |
| Air Only: No foam production and steam off | 12 | 8 | 9 |
| | 13 | 10 | |

The data indicates that the steam affects the Marcali test readings and gives a baseline of 25 ppb in the exhaust stream. Thus, the toluene diisocyanate present in the exhaust stream after the addition of steam is 26 ppb (51-25). The addition of the steam has reduced the amount of toluene diisocyanate present in the exhaust stack by 58 ppb (84-26) or by 31% (26/84).

## Claims

1. A method for removing free toluene diisocyanate from a polyurethane foam production line comprising introducing steam into the production line at at least one point where the free toluene diisocyanate is present.

2. A method according to claim 1, wherein the steam has an air-steam temperature from about 150°F (66°C) to about 220°F (104°C), and a pressure of from about 10 to about 60 psi (69 to 414 kPa).

3. A method according to claim 1 or 2, wherein the steam is introduced into the production line through a pipe having a plurality of holes therein.

4. A method according to any preceding claim, further comprising exhausting the reaction products of the steam and toluene diisocyanate to the atmosphere.

5. A method according to any of claims 1 to 3, further comprising condensing the steam and the reaction products of the steam and toluene diisocyanate for later disposal.

6. A method according to any preceding claim, wherein the steam is introduced in an amount sufficient to react with substantially all of the free toluene diisocyanate.

7. A method according to any preceding claim, wherein the steam contacts the free toluene diisocyanate for from about 2 seconds to about 23 seconds.

European Patent Office

**EUROPEAN SEARCH REPORT**

Application Number

EP 94 30 2991

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | R. VIEWEG AND A. HÖCHTLEN 'POLYURETHANE' 1966 , CARL HANSER VERLAG , MÜNCHEN KUNSTSTOFF-HANDBUCH VOL.7 pages 161-171 * page 171, paragraph 2 * | 1-7 | C08J9/00 B29C67/22 C08G18/08 |
| X | J.H. SAUNDERS AND K.C. FRISCH 'POLYURETHANES' 1964 , INTERSCIENCE PUBLISHERS , NEW YORK PART 2 TECHNOLOGY pages 84-88 * page 88, paragraph 2 * | 1-7 | |
| Y | US-A-3 190 857 (E.E. FAUSER ET AL.) * claims 1,4 * | 1 | |
| Y | US-A-4 051 211 (W. BESER ET AL.) * claims 1,2,4,5 * | 1 | |
| | | | TECHNICAL FIELDS SEARCHED (Int.Cl.5) |
| | | | C08J B29C C08G |

The present search report has been drawn up for all claims

| Place of search | Date of completion of the search | Examiner |
|---|---|---|
| THE HAGUE | 10 August 1994 | Van Puymbroeck, M |

EPO FORM 1503 03.82 (P04C01)